Europäisches Patentamt

(19) European Patent Office   (11) Publication number: **0 127 404**

Office européen des brevets                          **A1**

(12)                 **EUROPEAN PATENT APPLICATION**

(21) Application number: **84303388.7**          (51) Int. Cl.³: **A 01 M 29/00**

(22) Date of filing: **18.05.84**

(30) Priority: **23.05.83 AU 9470/83**

(43) Date of publication of application:
**05.12.84 Bulletin 84/49**

(84) Designated Contracting States:
**DE FR GB IT**

(71) Applicant: **Lindsay, John Patrick**
**21/90, Elizabeth Bay Road**
**Elizabeth Bay New South Wales 2011(AU)**

(72) Inventor: **Lindsay, John Patrick**
**21/90, Elizabeth Bay Road**
**Elizabeth Bay New South Wales 2011(AU)**

(74) Representative: **Abbie, Andrew Kenneth et al,**
**A.A. THORNTON & CO. Northumberland House 303/306**
**High Holborn**
**London, WC1V 7LE(GB)**

(54) Bird scarer.

(57) The invention discloses a bird scaring device consisting of a substantially planar figure in the form of a silhouette of a bird of prey, suspended by means of a plurality of tensioned support lines (24) stretched between the device and fixed supports (23).

FIG. 4

BIRD SCARER

TECHNICAL FIELD

This invention relates to bird scaring devices suitable for the protection of crops, fruit trees or other agricultural or horticultural purposes, for the protection of boats at moorings, and other purposes.

BACKGROUND ART

The prior art includes bird scaring devices or scarecrows the design of which includes recognition of the fact that many species of birds are frightened by a representation of a bird of prey such as a hawk or a falcon. Thus Berger U.S. Patent 2,576,209 discloses a device consisting of a simulated bird of prey, such as a hawk, which is provided with a mechanism so that the wings are flapped and the head turned periodically. In Farnam U.S. Patent 1,329,044 there is reference to the idea of a scarecrow made in imitation of a bird of prey, although the embodiment of the invention is not made in imitation of any particular bird of prey at all.

DISCLOSURE OF INVENTION

I have found that if a substantially planar figure in the form of the silhouette of a bird of prey in hovering flight, is suspended by means of a plurality of tensioned support lines stretched between this figure and respective fixed supports, then the area below and adjacent to the location of the suspended figure will remain clear of many troublesome species of birds.

While if the preferred embodiment of the invention the wing tip portions of the figure are hinged so that they may move up and down in a flapping movement relative to the remainder of the wing portion of the figure, this is not essential, and I believe this is due to the apparent life given to the figure by the fact that it will as a whole rise and fall with air currents, as a result of its mode of suspension.

Preferably, the bird scarer according to the invention comprises substantially co-planar laterally extended wings, oppositely extending tail and head portions, and wing tip portions which are serrated in a simplified representation of primary feathers.  Preferably, the head portion is in the form of a representation of the head and beak of a hawk or falcon.

BRIEF DESCRIPTION OF THE DRAWINGS

The preferred embodiment of the invention is described in relation to the accompanying drawings in which:

Fig. 1 is a plan view of a bird scarer embodying the present invention;

Fig. 2 is an end elevation of the bird scarer of Fig. 1;

Fig. 3 is a fragmentary cross-section taken on the line 3-3 of Fig. 1; and

Fig. 4 is a simplified plan view of a bird scaring installation according to the present invention.

DESCRIPTION OF PREFERRED EMBODIMENT

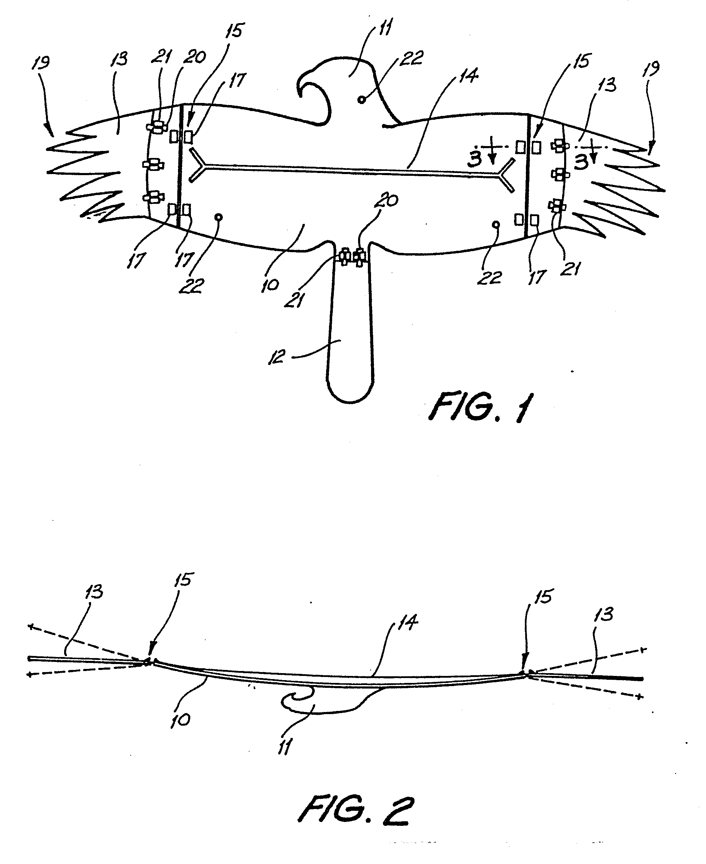

The bird scarer illustrated in Figs. 1 to 3 of the accompanying drawings is moulded in plastics material and comprises a central wing and body portion 10, head portion 11, tail portion 12, and wing tip portions 13.

The wing and body portion 10 may be slightly curved in front elevation as seen in Fig. 2, and this portion is provided with a lateral stiffening rib 14. The head portion 11 is preferably bent downwardly, as shown in Fig. 2.

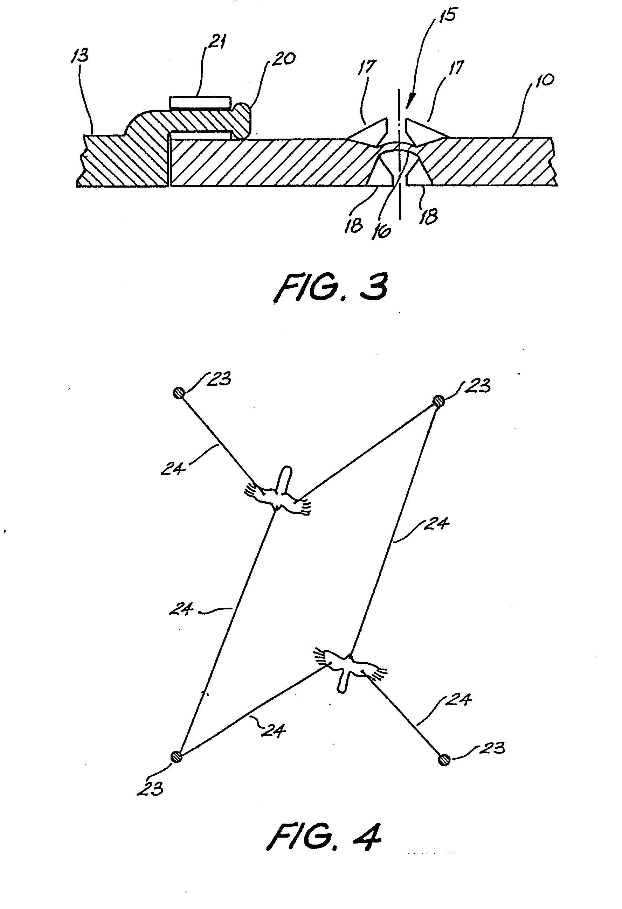

Between the wing tip portions 13 and the body portion 10 are provided integrally moulded hinges 15 which are shown in more detail in Fig. 3. These hinges comprise a connecting web 16, above and below which is located opposed spaced abutments 17 and 18, which limit the degree of deflection of the wing tip portions 13, approximately to the positions shown by the broken lines in Fig. 2. This deflection of the wing tips will occur due to wind action or as the figure as a whole moves up and down, and is believed to enhance the realism of the image of a bird of prey, but is not essential to the operation of the invention.

As will be observed, the wing tip portions 13 are heavily serrated at 19 in a simplified representation of the primary feathers of a hawk.

For ease of packaging, it is preferred that the tail portion 12 and the wing tip portions 13 are not moulded integrally with the remainder of the figure but attached to the remainder of the figure before use. For this purpose, these portions are provided with projections 20 which lock into sockets 21 provided on the main portion of the figure. This arrangement is shown in more detail in Fig. 3.

As will be seen in Fig. 1, three attachment points 22 are provided in the form of holes, two of which are located in the portion 10 and one of which is located, in this embodiment, in the head portion 11.  The illustrated bird scaring device is suspended by the attachment of three lines, one to each of these points, typically as shown in Fig. 4, where an array of two birds are suspended from four poles 23 by means of lines 24.  The lines 24 are tensioned so that the device is suspended horizontally and may move slightly up and down in the wind, somewhat reproducing the hovering flight of a bird of prey such as a hawk.  With this up and down movement of the device, hinging or flapping movement will also occur of the wing tip portions 13, and this is believed to provide unusual realism to the device.

Depending on the area to be controlled, a single bird scaring device of the present invention may be employed, or an array of devices suspended as shown in Fig. 4 from a number of poles, may be distributed over a larger area.  Where it is desired to protect fruit trees or other high objects where it is not possible to suspend the device above the object, then it should be suspended as high as possible and adjacent to it.

While it will in many cases be necessary to erect poles 23 for the suspension of the bird scarer, natural objects such as trees will of course be employed where they are available.

While the invention has been described in relation to one preferred embodiment, it will be understood that many variations are possible within the ambit of the invention as defined in the appended claims.

CLAIMS:

1.    A bird scarer comprising a substantially planar figure in the form of a silhouette of a bird of prey in hovering flight, said figure being suspended horizontally above or in elevated position and adjacent to its desired region of influence by means of a plurality of tensioned support lines stretched between said figure and respective fixed supports.

2.    A bird scarer according to claim 1 wherein said figure comprises substantially co-planar laterally extended wings, oppositely extending tail and head portions, and wing tip portions serrated in a simplified representation of primary feathers.

3.    A bird scarer according to claim 2 wherein said wing tip portions are hingedly connected with said wings so as to be capable of limited rotation about an axis substantially parallel to the longitudinal axis of the figure.

4.    A bird scarer according to claim 2 wherein the tail portion and the wing tip portions are detachably connected to the remainder of the figure.

1/2

FIG. 1

FIG. 2

FIG. 3

FIG. 4

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-U-7 519 762 (H.J. BOGON) <br> * Page 4, paragraph 2; page 5, paragraphs 2-3; figures 1-2 * | 1,2 | A 01 M 29/00 |
| A | WO-A-8 101 786 (R. HEIJNIS) <br> * Claims 1,3; figure 1 * | 1,2 | |
| A | GB-A-2 026 829 (S.J. GRESHAM) <br> * Page 2, lines 14-41; figure 1 * | 1 | |
| A | US-A-3 487 569 (S.C. MENDALL) <br> * Column 1, line 45 - column 2, line 6; figures 1,2 * | 1 | |

TECHNICAL FIELDS SEARCHED (Int. Cl. 3)

A 01 M

The present search report has been drawn up for all claims

| Place of search | Date of completion of the search | Examiner |
|---|---|---|
| THE HAGUE | 09-07-1984 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82